# EUROPÄISCHE PATENTANMELDUNG

(11) **EP 4 844 257 A1**
(43) Veröffentlichungstag der Anmeldung: **25.11.2026**
(21) Anmeldenummer: 26173421.4
(22) Anmeldetag: 20.04.2026
(51) Int. Cl.: F16M 7/00

(54) **STELLFUSS MIT VERKLEIDUNG**

(30) Priorität: 21.05.2025 DE 102025119682
(71) Anmelder: Otto Ganter GmbH & Co. KG Normteilefabrik, 78120 Furtwangen (DE)
(72) Erfinder: ROMBACH, Patrick, 78120 Furtwangen (DE)
(74) Vertreter: Riebling, Peter

(57) **Zusammenfassung**

Stellfuß (46) in der Ausbildung als Maschinen- oder Apparatefuß mit einem sich auf einer Aufstellfläche abstützenden Gewindeschaft (31), auf dem ein Gewindeelement (36) aufgeschraubt ist, bei dessen Drehung die Höhenlage des Stellfußes in Verbindung mit einer Tragvorrichtung (20) einstellbar ist, wobei die Tragvorrichtung einen höheneinstellbaren Gegenstand trägt und der Gewindeschaft im Innenraum einer ersten Hülse (1) kleineren Durchmessers angeordnet ist, wobei die erste Hülse (1) koaxial von einer zweiten Hülse (10) größeren Durchmessers umgeben ist, und die beiden Hülsen (1, 10) mit Betätigung des Gewindeelements (36) in axialer Richtung gegeneinander verschiebbar sind, wobei zur Schaffung eines Zugriffs auf das innenliegende Gewindeelement (36) die zweite Hülse (10) an der Tragvorrichtung (20) lösbar eingehängt ist.

## Beschreibung

Gegenstand der Erfindung ist ein Stellfuß mit Verkleidung in der Ausbildung als Maschinen- oder Apparatefuß gemäß dem Oberbegriff des Patentanspruchs 1.

Stellfüße kommen in verschiedensten Bereichen zum Einsatz, in denen eine dauerhafte oder zeitweise Höhenverstellung, bzw. ein Nivellieren in der Höhe und der Aufstelllage erforderlich ist - etwa im Maschinenbau, im Möbelbereich oder in der Fertigungstechnik. Sie dienen insbesondere dazu, Maschinen, Werkbänke oder Geräte auch auf unebenen Untergründen stabil und höhengenau zu positionieren. Typischerweise bestehen sie aus einem Gewindeschaft, der mit einer tragenden Einheit verbunden ist, sowie einer Basisplatte, die als Auflage auf dem Boden dient und stoß- bzw. vibrationsdämpfend ausgeführt sein kann.

Die Höhenanpassung erfolgt dabei üblicherweise über eine Gewindeverbindung zwischen dem Stellfuß und der tragenden Konstruktion. Ergänzend werden häufig Auflageelemente an der Unterseite der Auflagefläche in Anwendung gebracht. Einerseits als elastische Komponenten, etwa aus Elastomer, integriert, um Vibrationen zu dämpfen und so die Funktionssicherheit und Langlebigkeit der Baugruppe zu erhöhen, anderseits aus gleitfähigen Materiealien, wie z. B. Kunststoff, um seitliche Verschiebekräfte klein und damit deutlich geringer als bei den Elastomeren zu halten.

Bei bekannten Stellfüßen mit höhenverstellbaren Tragvorrichtungen treten jedoch mehrere Nachteile auf: Häufig mangelt es an ausreichender Stabilität und Präzision der Gewindeverbindung. Insbesondere bei mechanisch belasteten Anwendungen kann es zu einem ungewollten Lösen oder Nachgeben kommen, etwa durch Spiel im Gewinde oder unzureichende Klemmkraft. Dies kann zu Fehlstellungen, ungleichmäßiger Belastung oder Funktionsstörungen führen.

Ein weiteres Problem betrifft den Schutz des Gewindeschafts. Bei vielen bekannten Ausführungen ist dieser äußeren Einflüssen wie Schmutz, Feuchtigkeit oder mechanischer Beschädigung nahezu ungeschützt ausgesetzt - was insbesondere in industriellen Umgebungen zu schneller Abnutzung und Funktionseinbußen führt.

Die DE 10 2019 122 801 B3 beschreibt einen Stellfuß in der Ausbildung als Maschinen- oder Apparatefuß mit einem sich auf einer Aufstellfläche abstützenden Gewindeschaft, auf dem ein Gewindeelement aufgeschraubt ist, bei dessen Drehung die Höhenlage des Stellfußes in Verbindung mit einer Tragvorrichtung einstellbar ist, wobei die Tragvorrichtung einen höheneinstellbaren Gegenstand trägt und der Gewindeschaft im Innenraum einer ersten Hülse kleineren Durchmessers angeordnet ist, die koaxial von einer zweiten Hülse größeren Durchmessers umgeben ist, und die beiden Hülsen mit Betätigung des Gewindeelements in axialer Richtung gegeneinander verschiebbar sind.

Die Höhenverstellung erfolgt bei dieser bekannten Lösung durch einen Gewindeeingriff zwischen einer Tragspindel und einem mit der Außenhülse gekoppelten Gewindeelements. Dies ist jedoch unpraktisch und unter ergonomischen sowie sicherheitstechnischen Gesichtspunkten nachteilig, insbesondere bei schwereren Maschinenaufbauten oder begrenztem Zugang zum Stellfuß.

Der Erfindung liegt daher die Aufgabe zugrunde, einen Stellfuß der eingangs genannten Art so weiterzubilden, dass unter Berücksichtigung möglicher Belastungen auf die Tragvorrichtung eine vereinfachte, sichere und präzise Höhenverstellung des Stellfußes möglich ist, wobei gleichzeitig ein wirksamer Schutz der Gewindeverbindung gegenüber äußeren Einflüssen gewährleistet bleibt.

Die Aufgabe wird erfindungsgemäß durch die Merkmale des unabhängigen Patentanspruches gelöst, während vorteilhafte Ausgestaltungen und Weiterbildungen der Erfindung den Unteransprüchen entnommen werden können.

Ein vorteilhaftes Merkmal ist, dass die obere Hülse lösbar an der Tragvorrichtung eingehängt ist.

In einer bevorzugten Ausführungsform ist diese obere Hülse im gelösten Zustand in axialer Richtung auf der ersten Hülse gleitbar ausgebildet.

In einer weiteren Ausführungsform besteht zwischen der ersten und der zweiten Hülse eine Reibschlussverbindung oder es handelt sich um eine Verbindung die sich nicht werkzeuglos lösen lässt.

In weiteren Ausführungsformen ist eine Rastverbindung vorgesehen, bei der ein erstes Bauteil mit einem zweiten Bauteil durch eine formschlüssige Verbindung miteinander verrastet wird. Die Rastverbindung kann beispielsweise durch eine Rastnase und eine korrespondierende Rastnut realisiert sein.

Die Rastverbindung kann als Schnapprastung ausgestaltet sein, wobei eine federelastische Verformung eines der beteiligten Bauteile, insbesondere eines hülsenartigen Elements, beim Zusammenschieben der Bauteile eine automatische Verrastung bewirkt. Diese Rastung kann sowohl fühlbar als auch hörbar erfolgen.

In weiteren Ausführungsformen kann die Rastverbindung als Steckrastung ausgebildet sein, bei der die Verrastung durch das Einführen eines Innenteils in ein Außenteil erfolgt.

Alternativ kann die Verrastung durch eine Druckrastung realisiert sein, bei der die Bauteile durch eine lineare Verschiebung gegeneinander in eine Rastposition überführt werden, ohne dass eine Drehbewegung erforderlich ist.

Die obere Hülse ist bevorzugt als Rasthülse ausgebildet, die eine formschlüssig lösbare Verbindung mit der Unterseite der Tragvorrichtung eingeht. Die Oberseite der Tragvorrichtung bildet eine mindestens teilweise plattenförmige Auflage- oder Anlagefläche für ein darüber angeordnetes Element, beispielsweise ein Maschinengestell.

Die Hülse weist an ihrem der Tragvorrichtung zugewandten Ende einen Rastabschnitt auf, der insbesondere in Form einer Rast- oder Schnappverbindung ausgebildet ist. Demgegenüber weist die Tragvorrichtung an ihrem der Hülse zugewandten Ende einen Verbindungsabschnitt auf, der mindestens einen Steg und mindestens ein sich nach innen erstreckendes Element umfasst.

Durch das Lösen der Rastverbindung und das Verschieben der oberen Hülse in Richtung der Basisplatte wird ein Zugriff auf das Gewindelement ermöglicht, das beispielsweise als Flanschmutter ausgebildet sein kann. Durch das Verdrehen des Gewindeelements ist eine feinere Einstellung der Axialposition der Tragvorrichtung relativ zur Basisplatte möglich, wobei der Gewindeschaft seine rotatorische Ausrichtung beibehält und sich nicht mitdreht. Dabei handelt es sich bei der maschinentischseitigen Aufnahme um ein Durchgangsloch ohne Gewinde.

Bei einem in ein Objekt eingeschraubten Gewindeschaft wird die Verbindung durch das Gewindelement gesichert. Dabei handelt es sich bei der maschinentischseitigen Aufnahme bevorzugt um eine Gewindebohrung. In diesem Fall wirkt das nach oben geschraubte Gewindeelement, das sich von unten an die Tragvorrichtung anlegt, wie eine Kontermutter.

Wie hierin verwendet, beziehen sich die Begriffe "axial" auf Richtungen und Orientierungen, die sich im Wesentlichen parallel zur Längsachse erstrecken.

Zum Erzeugen einer Rastverbindung mit der Tragvorrichtung weist die obere Hülse einen Rastabschnitt im axial oberen Bereich auf.

Dieser Rastabschnitt enthält mindestens eine Rastnase mit einer Hinterschneidung, in die ein Steg an der Unterseite der Tragvorrichtung einfährt und dort verrastet. Dabei schließt sich die Hinterschneidung hinter eine Kante des im Querschnitt rechteckigen Stegs und sorgt so für eine zuverlässige Fixierung. Es handelt sich somit um an die Tragvorrichtung angeformte oder ausgeschnittene Stege, die in zugeordnete Aufnahmeräume der oberen Hülse eingreifen und dort eine stabile Verbindung herstellen.

In einer kinematisch umkehrbaren Ausführung kann es auch vorgesehen sein, dass an der Tragvorrichtung entsprechende Aufnahmeräume angeordnet sind, in die Stege der Hülse eingreifen. Diese Stege der Hülse würden dann in die Aufnahmeräume der Tragvorrichtung einfahren und dort ebenfalls eine Verrastung und Fixierung ermöglichen.

Beide konstruktiven Ausgestaltungen gewährleistet eine einfache Montage und sichert die Stabilität der Verbindung zwischen den Komponenten.

Die Rastnasen sind in Umfangsrichtung ausgerichtet, sodass bei einer Schraubbewegung der Hülse oder der deckelartig auf der Hülse angeordneten Tragvorrichtung die Stege an der Unterseite der Tragvorrichtung unter die Rastnasen einfahren. Diese Bewegung sorgt für eine zuverlässige Verrastung und Fixierung der Tragvorrichtung in der gewünschten Position, da die Stege beim Einfahren unter die Rastnasen deren Hinterschneidungen übergreifen und die Tragvorrichtung somit in ihrer Stellung sichern.

Der Rastabschnitt weist außerdem eine Einführschräge auf, die das Einführen des Steges unter die Rastnase erleichtert. Nach dem Überwinden der Einführschräge fährt der Steg in den Aufnahmeraum unter der Rastnase ein und wird dort durch die Hinterschneidung gesichert.

Zusätzlich kann der Rastabschnitt mindestens einen Federkörper aufweisen, der sich an der Unterseite der Tragvorrichtung anlegt - insbesondere dann, wenn der genannte Steg in den Aufnahmeraum einfährt. In diesem Fall drückt die Unterseite der Tragvorrichtung auf den Steg des Federkörpers.

Der Federkörper besteht aus dem Material der oberen Hülse und ist durch ein mechanisches Fertigungsverfahren als materialeinstückiger oder auch separater Federsteg geformt, der zwei seitlich angeordnete Federschleifen miteinander verbindet. Die Federschleifen der Hülse bestehen aus zwei spiralförmigen, ringförmigen Oberflächen, die jeweils einen Bogen von 180° bis 270° umfassen. Diese Oberflächen weisen aufwärtsgerichtete Neigungen in entgegengesetzten Umfangsrichtungen auf und sind durch den Federsteg voneinander getrennt.

Der mindestens eine Federkörper legt sich an der Unterseite der Tragvorrichtung an, insbesondere wenn der oder die genannten Stege in die Aufnahmeräume einfahren. Dabei drücken das sich senkrecht erstreckende Elemente von der Unterseite der Tragvorrichtung auf den Steg des Federkörpers.

Diese Elemente, die mit den Federteilen - insbesondere den Federstegen - bei der Rastverbindung der Rastnasen korrespondieren, tragen zur Stabilisierung der Rastverbindung bei. Die Federwirkung erzeugt eine zusätzliche Rückhaltekraft, die die Rastnasen in ihrer eingerasteten Position fixiert. Durch diese federunterstützte Verrastung wird ein unbeabsichtigtes Lösen der Verbindung verhindert, da die Federkraft die Rastnasen in ihrer Einrastposition hält und einer Lockerung entgegenwirkt. Dadurch wird die Stabilität der Verbindung gegenüber äußeren Kräften, die auf die Tragvorrichtung einwirken, weiter erhöht, was die Sicherheit und Zuverlässigkeit des gesamten Mechanismus steigert.

Die vorliegende Erfindung ist nicht auf eine Kombination von Federkörpern und Rastnasen beschränkt; auch das Vorhandensein nur einer dieser beiden Lösungen wird beansprucht. Die Anzahl der Federkörper und/oder Rastnasen kann zudem variieren, beispielsweise eins, zwei, drei oder mehr umfassen.

Ebenso ist die vorliegende Erfindung nicht auf das Vorhandensein einer Rastverbindung beschränkt. Um das bevorzugte Merkmal zu realisieren - nämlich, dass die obere Hülse lösbar an der Tragvorrichtung eingehängt ist - können in weiteren Ausführungsformen auch eine Schraubverbindung oder eine Steckverbindung vorgesehen sein.

Die beiden Hülsen bestehen bevorzugt aus Metall, insbesondere aus Edelstahl, oder aus einem Kunststoff.

Die beiden Hülsen sind vorzugsweise im Wesentlichen zylinderförmig und teleskopartig über einen definierten Verschiebebereich ineinander und auseinander schiebbar angeordnet. Dabei weist die untere Hülse einen geringeren Durchmesser als die obere Hülse auf. Wenigstens an einem oberseitigen Hülsenende der unteren Hülse ist zwischen der Außenseite der unteren Hülse und der Innenseite der oberen Hülse ein Dichtelement angeordnet, das eine abdichtende Funktion erfüllt.

In einer alternativen Ausführungsform weist die untere Hülse einen größeren Durchmesser als die obere Hülse auf. So handelt es sich um einen Stellfuß in der Ausbildung als Maschinen- oder Apparatefuß mit einem sich auf einer Aufstellfläche abstützenden Gewindeschaft, auf dem ein Gewindeelement aufgeschraubt ist, bei dessen Drehung die Höhenlage des Stellfußes in Verbindung mit einer Tragvorrichtung einstellbar ist, welche Tragvorrichtung einen höheneinstellbaren Gegenstand trägt, wobei der Gewindeschaft im Innenraum einer ersten Hülse größeren Durchmessers angeordnet ist und die erste Hülse koaxial in einer zweiten Hülse kleineren Durchmessers angeordnet ist, und die beiden Hülsen bei Betätigung des Gewindeelements in axialer Richtung gegeneinander verschiebbar sind, wobei zur Schaffung eines Zugriffs auf das innenliegende Gewindeelement die zweite Hülse an der Tragvorrichtung lösbar eingehängt ist.

Der Gewindeschaft ist schwenkbar gelagert und hat einen Fuß mit einer Ausbuchtung, der auf der konvexen Wölbung einer Verstärkungsscheibe aufliegt. Die Verstärkungsscheibe liegt entweder auf der Basisplatte auf oder ist in dieser eingebettet.

So wird eine Art Kugelgelenks gebildet, was es ermöglicht, die Basisplatte schräg zu stellen, um Unebenheiten oder fehlende Parallelität des Untergrunds auszugleichen.

Die Basisplatte besteht aus einem Elastomer, und die Verstärkungsscheibe ist durch Vulkanisation eingebettet oder alternativ durch eine formschlüssige Schnapprastverbindung, bei der mindestens ein Element mittels elastischer Verformung in eine korrespondierende Aufnahme einschnappt, verbunden. mit dem Elastomer verbunden. Elastomere sind formfeste, jedoch elastisch verformbare Kunststoffe, deren Glasübergangspunkt unterhalb der Einsatztemperatur liegt. Diese Kunststoffe können sich bei Zug- und Druckbelastung elastisch verformen und kehren anschließend in ihre ursprüngliche, unverformte Gestalt zurück.

Die Tragvorrichtung hat eine zentrale Öffnung für den Gewindeschaft, als Durchloch ausgeführt, dessen Außengewinde in das korrespondierende Innengewinde eines auf der Tragvorrichtung aufliegenden Bauteils oder Elements eingreift.

Der Stellfuß eignet sich ideal zur präzisen Höheneinstellung von Werkbänken, Maschinen oder Tischen - insbesondere in Umgebungen mit hohen Anforderungen an Stabilität und Genauigkeit. Die Kombination aus federunterstützter Rastverbindung und optionaler Kontermutter sorgt für eine zuverlässige, lösbare Fixierung mit hoher Haltekraft, selbst bei Vibrationen oder dynamischer Belastung.

Die feinfühlige Verstellung über ein Gewindeelement ermöglicht eine exakte Positionierung, während die Kugelgelenklagerung des Gewindeschafts ein Neigen der Basisplatte erlaubt - ideal zum Ausgleich von Bodenunebenheiten. Die elastomere Basisplatte wirkt zusätzlich dämpfend und erhöht die Standfestigkeit.

Teleskopartig verschiebbare Hülsen ermöglichen eine kompakte Bauweise und einfache Montage. Die Verbindung zur Tragvorrichtung kann je nach Anforderung als Rast-, Steck- oder Schraubverbindung ausgeführt werden, was die Konstruktion besonders flexibel macht.

Dank robuster Materialien wie Edelstahl oder widerstandsfähigem Kunststoff ist die gesamte Baugruppe korrosions- und witterungsbeständig - und somit bestens für den langlebigen Einsatz in anspruchsvollen Umgebungen geeignet.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung, könnten als erfindungswesentlich beansprucht werden, soweit sie einzeln oder in Kombination gegenüber dem Stand der Technik neu sind. Die Verwendung der Begriffe "wesentlich" oder "erfindungsgemäß" oder "erfindungswesentlich" ist subjektiv und impliziert nicht, dass die so benannten Merkmale zwangsläufig Bestandteil eines oder mehrerer Patentansprüche sein müssen.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: eine Schnittdarstellung des Stellfußes mit Verkleidung
- Figur 2:: eine perspektivische Ansicht von Figur 1
- Figur 3:: eine Schnittdarstellung der oberen Hülse
- Figur 4:: eine perspektivische Ansicht einer Hülse
- Figur 5:: eine teiltransparente Darstellung der Stellfußverkleidung
- Figur 6:: eine teiltransparente Darstellung der Stellfußverkleidung
- Figur 7:: eine Schnittdarstellung eines verschwenkten Stellfuß mit Verkleidung

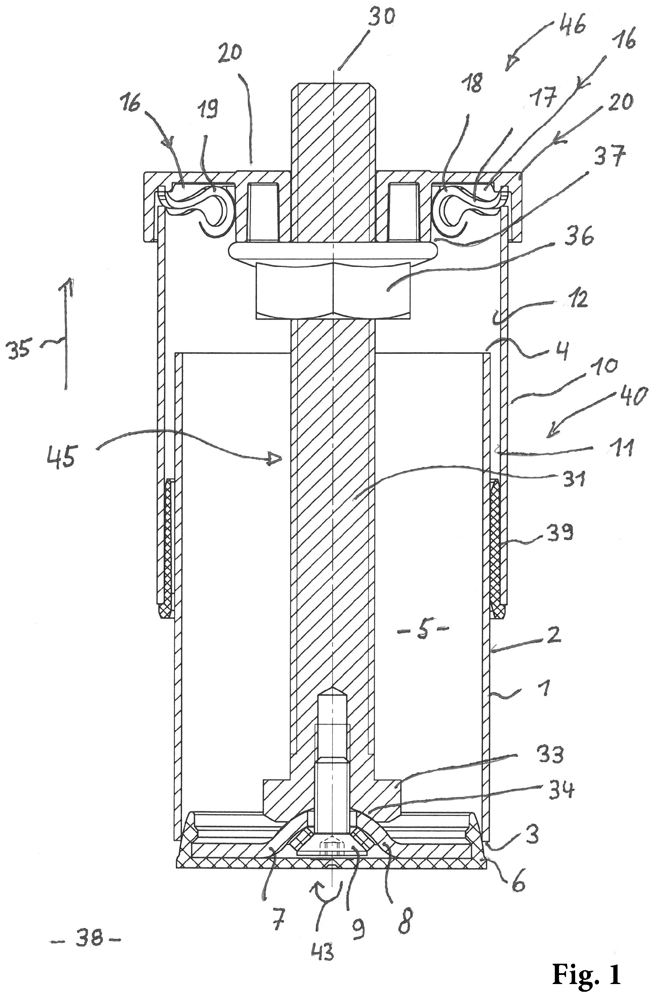

Figur 1 zeigt einen Stellfuß 46 für Tische, Werkbänke und Maschinen im Maschinenbaubereich mit einer Stellfußverkleidung 40, die sowohl Schutz als auch ein ansprechendes Design bietet.

Dieser Stellfuß 46 ermöglicht eine einfache und stabile Justierung der Höhe eines auf der Tragvorrichtung 20 lastenden Elements mittels Werkzeugs.

Die Stellfußverkleidung 40 besteht aus einer unteren Hülse 1 und einer oberen Hülse 10. Die untere Hülse 1 hat einen kleineren Durchmesser als die obere Hülse 10 und sitzt auf einer Basisplatte 6 auf. Die Basisplatte 6 weist eine topfförmige Struktur auf und ist typischerweise aus Gummi gefertigt ist, um eine rutschfeste und stoßdämpfende Funktion zu gewährleisten. In der Mitte der Basisplatte 6 befindet sich eine Verstärkungsscheibe 7 mit einer konvexen Wölbung 8. Diese Wölbung dient als Aufnahmefläche für einen Gewindeschaft 31, dessen Fuß 33 mittels einer Ausbuchtung 34 auf der Wölbung 8 aufliegt. Innerhalb der Wölbung 8 ist der Kopf einer Schraube 9 gelagert, die durch eine Aussparung in der Wölbung 8 hindurchgeführt und in den Gewindeschaft 31 eingeschraubt ist.

Der Gewindeschaft 31 ist über das Außengewinde 32 in ein Gewindeelement 36 eingeschraubt. Dieses Gewindeelement 36 besitzt eine verbreiterte Oberseite, auf deren Auflagefläche 37 die Tragvorrichtung 20 aufliegt. Im gezeigten Beispiel nach Figur 1 ist das Gewindeelement 36 als Flanschmutter ausgebildet, wobei der Flansch an der Tragvorrichtung 20 anliegt.

Der Gewindeschaft 31 im Innenraum 5 der ersten Hülse 1 kleineren Durchmessers angeordnet ist, wobei die erste Hülse 1 koaxial von einer zweiten Hülse 10 größeren Durchmessers umgeben ist und mit ihrer Stirnseite 4 in sie hineinragt.

Der Tragvorrichtung 20 steht in federndem Kontakt mit zwei Federkörpern 16, die sich an der oberen Hülse 10 befinden.

Dabei besteht ein Federkörper 16 aus einem streifenförmigen Material, das in sich geschlossen ist und durch die Federschleifen 18, 19 sowie einen die Federschleifen verbindenden Raststeg 17, der eine elastische Kraft ausübt, wenn der Raststeg 17 mit der Tragvorrichtung in Kontakt kommt. Dieser Federkörper 16 sorgt dafür, dass die Tragvorrichtung 20 festsitzt. Zum Verstellen der Höhe über den Stellfuß muss die Hülse 10 ausgehängt werden, damit die Mutter 36 zugänglich wird. Die Verstellung selbst findet durch antreiben des Gewindeschafts 31 über den Sechskant 33 im Bereich des Fußes statt.

Bevorzugt sind zwei Federkörper 16 an der kreisförmigen Stirnseite der Hülse 10 angeordnet, wobei dieser Bereich auch als Rastabschnitt 45 bezeichnet wird.

Der Gewindeschaft 31 kann mit einem Werkzeug, wie einem Sechskantschlüssel, in 43 gedreht werden. Dies ermöglicht eine präzise Höhenverstellung der Stellfußkomponenten, insbesondere der Tragvorrichtung 20. Um den Gewindeschaft 31 zu drehen, wird die untere Hülse 1 in Pfeilrichtung 35 angehoben und in die obere Hülse 10 mindestens teilweise eingeführt. Sobald die Hülse 1 angehoben ist, wird der Fuß 33 des Gewindeschafts 31 zugänglich, der eine Sechskantprofilform aufweist und somit einen passenden Werkzeugangriff für die Drehbewegung bietet.

Eine Kunststoffeinlage 39 zwischen der unteren und oberen Hülse sorgt für eine Lagerung und ermöglicht eine relative Bewegung der beiden Hülsen 1 und 10, wodurch der Mechanismus flexibel bleibt und gleichzeitig die Abdeckung eine Schutzfunktion übernimmt. Dies sorgt nicht nur für eine bessere Abdichtung, sondern auch für eine reibungsarme Bewegung zwischen den beiden Bauteilen. Die Kunststoffeinlage 39 verhindert zudem, dass Staub und Schmutz in den Mechanismus eindringen, was die Lebensdauer und Funktionsfähigkeit des Stellfußes erhöht. So ist die Kunststoffeinlage zwischen der Mantelfläche 2 der Hülse 1 und der Innenfläche 11 der Hülse 10 angeordnet.

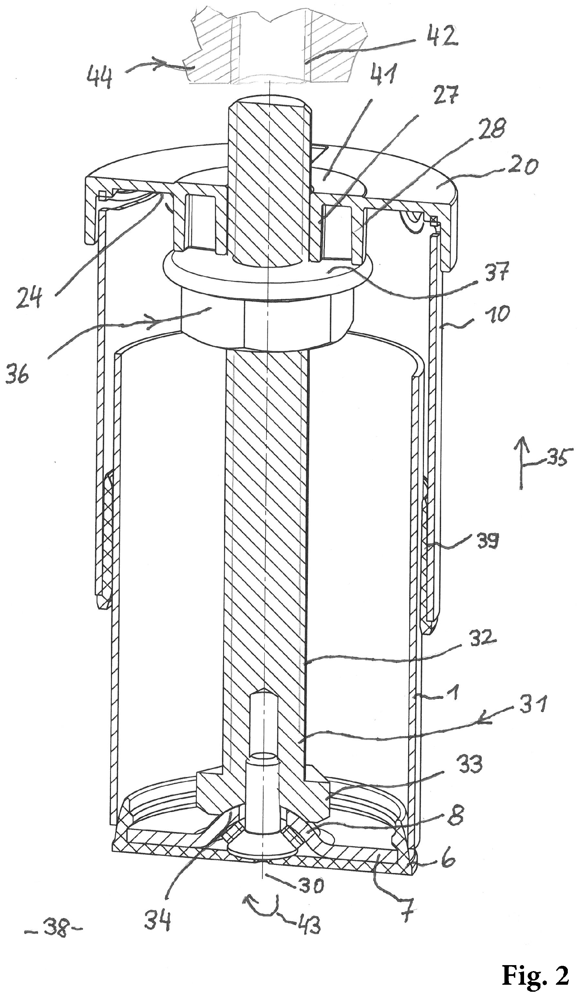

Figur 2 zeigt die höhenausgleichbare Tragvorrichtung 20, die entlang einer Längsachse 30 verläuft und auf dem Gewindeelement 36 mit Innengewinde lastet, sowie die unterhalb der Tragvorrichtung 20 angeordnete Hülse 10, die den mit der Basisplatte 6 verbundenen Gewindeschaft 31 umschließt, wobei dieser das Außengewinde 32 aufweist, das mit dem Innengewinde des Gewindeelements 36 korrespondiert, welches verstellbar mit dem Gewindeschaft 31 verbunden ist. Dabei umfasst der Stellfuß 46 die koaxial zur Hülse 10 angeordnete, in vertikaler Richtung verschiebbare Hülse 1, die in einer Endstellung auf der Basisplatte 6 aufsteht und den Gewindeschaft 31 gegen die Umgebung abdeckt.

Die Basisplatte 6 liegt auf dem Untergrund 38 auf.

Die Tragvorrichtung 20 weist zwei konzentrische Zylinder 27, 28 auf, die sich in Richtung des Gewindeelements 36 erstrecken und auf diesem aufstehen.

Das Außengewinde 32 kann in das Innengewinde 42 eines Bauteils 44 geschraubt werden. Dazu kann der Fuß 33 über ein Werkzeug gedreht werden. Somit kann das Bauteil 44 auf der Kontaktfläche 41 der Tragvorrichtung 20 fixiert werden.

Der Gewindeschaft 31 ist schwenkbar gelagert und weist den Fuß 33 mit der Ausbuchtung 34 auf, die auf einer konvexen Wölbung 8 einer Verstärkungsscheibe 7 aufliegt, wobei die Verstärkungsscheibe entweder auf der Basisplatte 6 aufliegt oder in dieser eingebettet ist.

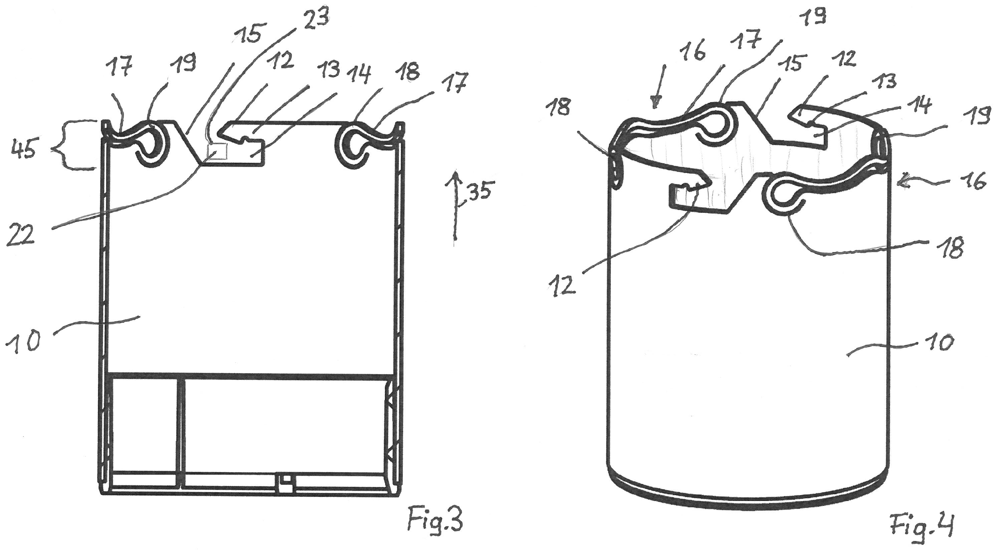

Figur 3 zeigt die Hülse 10 in Seitenansicht im Vollschnitt, während Figur 4 die Hülse in perspektivischer Ansicht darstellt. Figur 3 ist eine geschnittene Darstellung, wobei man die im Bezug auf die Zeichenebene hintere, in Figur 4 dargestellte Rastnase 12 sieht. Der obere Rand der Hülse 10 weist zwei verschiedenartige Mechanismen auf, um eine sichere Verbindung mit einem Tragvorrichtung 20 zu erzielen und zu verhindern, dass sich die Verbindung unbeabsichtigt löst. Dabei handelt es sich um eine Art von Bajonettverbindung, bei der durch eine Drehbewegung eine mechanische Verriegelung entsteht. Der obere Rand wird im Folgenden als Rastabschnitt 45 bezeichnet.

Eine Rastnase 12 erstreckt sich horizontal in Umfangsrichtung der Hülse 10 und begrenzt oberhalb einen Aufnahmeraum 14, der seitlich geöffnet ist. Das Gegenteil der Bajonettverbindung kann über eine diagonal nach unten verlaufende Einführschräge 15 in Richtung des Aufnahmeraums 14 eingeführt werden. Bei diesem Gegenteil handelt es sich um einen Steg 22, der in Figur 3 schematisch eingezeichnet ist. Der Steg 22 hat im Querschnitt eine rechteckige Form und weist eine obere Kante 23 auf. Beim Einführen des Stegs 22 in den Aufnahmeraum 14 passiert die Kante 23 zunächst eine Hinterschneidung 14 unterhalb der Rastnase 12, wodurch diese kurzzeitig angehoben wird. Nachdem die Kante 23 die Hinterschneidung passiert hat, legt sie sich an der Hinterschneidung 14 an und verhindert somit, dass der Steg 22 ohne größere Kraftaufwendung in Richtung der Einführschräge 15 zurückbewegt werden kann.

Durch die Positionierung der Tragvorrichtung 20 auf der Stirnseite der Hülse 10 und die Einführung des Steges 22 der Tragvorrichtung 20 unter die Rastnase 12 erfolgt eine axiale Bewegung der Tragvorrichtung 20 entgegen der Pfeilrichtung 35. Dabei drückt die Tragvorrichtung 20 auf den Federkörper 16, der sich federnd an einem bestimmten Bereich an der Unterseite 24 der Tragvorrichtung 20 anlegt.

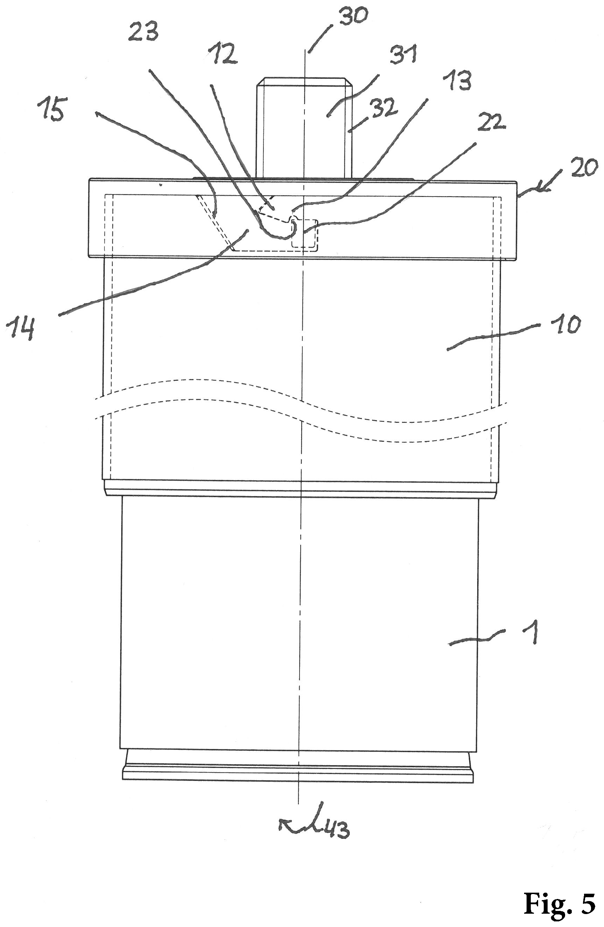

Figur 5 zeigt den in den Aufnahmeraum 14 eingeführten Steg 22, der sich mit seiner Kante 23 hinter die Hinterschneidung 13 legt. Vor dem Einführen in den Aufnahmeraum 14 wurde der Steg 22 über die Einführschräge 15 nach unten geführt, wodurch die Tragvorrichtung 20 ebenfalls um diese Höhendifferenz in axialer Richtung bewegt wurde. Die Einführung wird immer durch ein Verdrehen der Tragvorrichtung und/ oder der Hülse 10 in Drehrichtung 43 oder entgegen dieser realisiert.

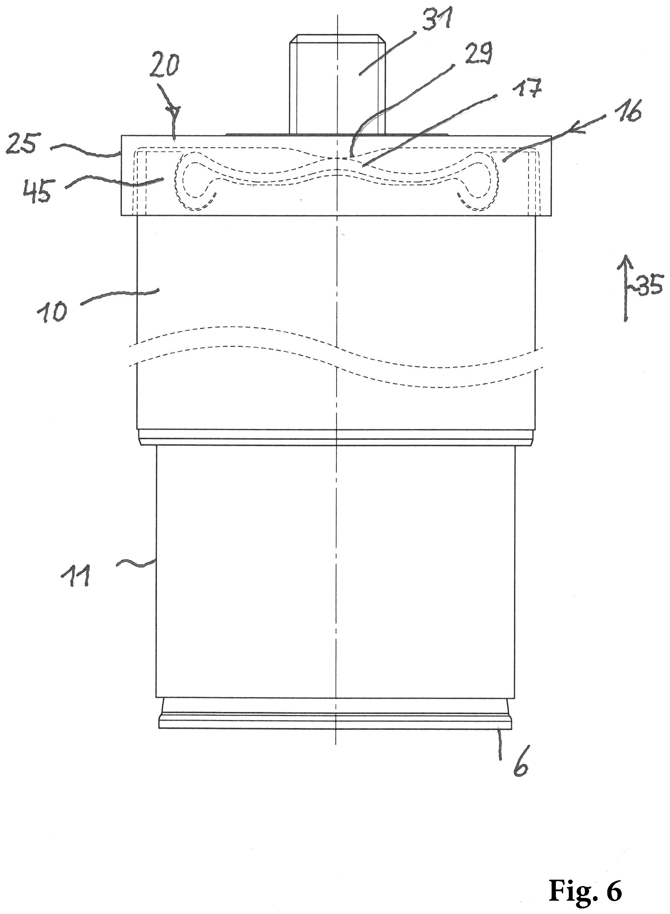

Figur 6 zeigt eine gegenüber Figur 5 um 90° gedrehte Ansicht. Aufgrund der axialen Bewegung der Tragvorrichtung entgegen der Pfeilrichtung 35 drückt ein an der Unterseite 24 der Tragvorrichtung befindliches und von dieser nach unten herausragendes Element 29 auf den Federsteg 17 des Federkörpers 16. Durch die Bewegung in Drehrichtung 43 wird das Element 29 auf den Federsteg geschoben, der an der Endposition des Elements 29 nach oben ragt. Somit ist in dieser Endposition das Element, welches eine Wölbung sein kann und die Wölbung des Federstegs maximal zueinander ausgerichtet ist.

Die Hülse 10 weist an ihrem der Tragvorrichtung 20 zugewandten Ende einen Rastabschnitt 45 auf, der insbesondere in Form einer Rastverbindung oder Schnappverbindung ausgebildet ist. Im Gegensatz dazu weist die Tragvorrichtung 20 an ihrem der Hülse 10 zugewandten Ende einen Verbindungsabschnitt 25 auf, der mindestens einen Steg 22 und mindestens ein sich nach innen erstreckendes Element 29 umfasst.

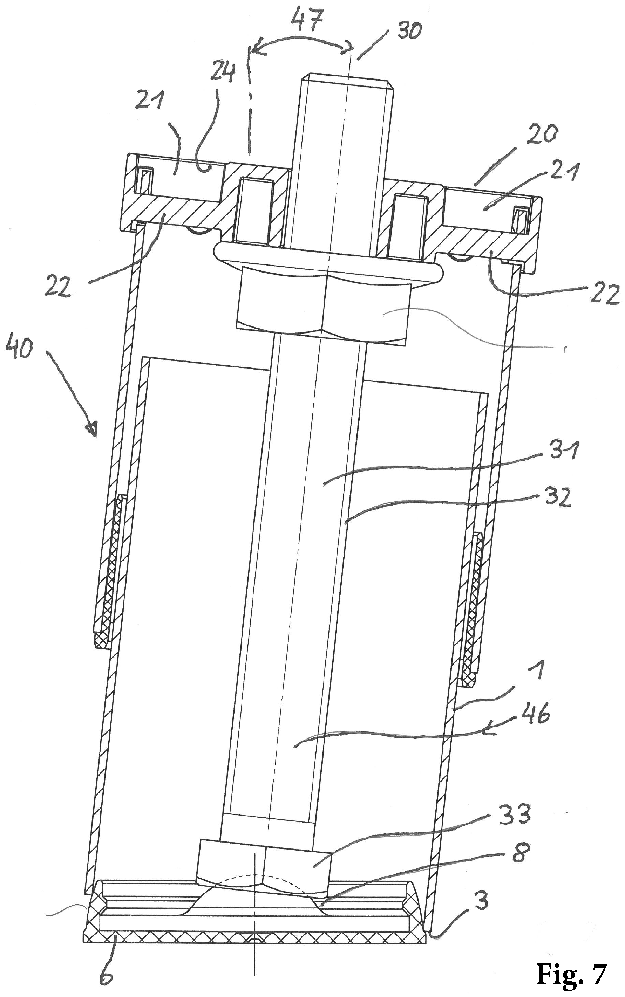

Figur 7 zeigt einen Schnitt durch die Stellfußverkleidung 40. Unter anderem aufgrund der losen Auflage der unteren Stirnseite 3 der unteren Hülse 1 auf der Basisplatte 6 ist es möglich, den Stellfuß 46 um den Winkel 47 bezogen auf die ursprüngliche vertikale Ausrichtung der Längsachse 30 zu verschwenken. Die Basisplatte 6 weist einen konischen Querschnitt mit einer sich nach oben hin verjüngenden Wandung 48 auf. Dadurch kann der Abschnitt der Stirnseite 3, der sich infolge der Verschwenkung anhebt, den Kontakt mit der seitlichen Wandung 48 der Basisplatte 6 aufrechterhalten.

Dabei liegt der Fuß 33 des Gewindeschafts 31 mit einer - in dieser Darstellung nicht gezeigten - Ausbuchtung 34 auf der Wölbung 8 auf und ist auf dieser verschiebbar gelagert.

In Figur 7 sind außerdem die beidseitig angeordneten Stege 22 dargestellt, die jeweils eine Aussparung 21 aufweisen. Dadurch entsteht zwischen der Oberseite der Stege 22 und der Unterseite 24 der Tragvorrichtung 20 ein Freiraum. In diesen durch die Aussparung 21 gebildeten Freiraum kann die Rastnase 12 einfahren.

### Zeichnungslegende

- 1: Hülse (unten)
- 2: Mantelfläche
- 3: Stirnseite
- 4: Stirnseite
- 5: Innenraum
- 6: Basisplatte
- 7: Verstärkungsscheibe
- 8: Wölbung
- 9: Schraube
- 10: Hülse (oben)
- 11: Innenfläche
- 12: Rastnase
- 13: Hinterschneidung
- 14: Aufnahmeraum
- 15: Einführschräge
- 16: Federkörper
- 17: Federsteg
- 18: Federschleife
- 19: Federschleife
- 20: Tragvorrichtung
- 21: Aussparung
- 22: Steg
- 23: Kante (von 22)
- 24: Unterseite
- 25: Verbindungsabschnitt
- 26: Auflagebereich
- 27: Ring
- 28: Ring
- 29: Element
- 30: Längsachse
- 31: Gewindeschaft
- 32: Außengewinde
- 33: Fuß
- 34: Ausbuchtung
- 35: Pfeilrichtung
- 36: Gewindeelement
- 37: Auflagefläche
- 38: Untergrund
- 39: Kunststoffeinlage
- 40: Stellfußverkleidung
- 41: Kontaktfläche
- 42: Innengewinde
- 43: Drehrichtung
- 44: Bauteil
- 45: Rastabschnitt
- 46: Stellfuß
- 47: Winkel
- 48: Wandung (von 6)

## Patentansprüche

1. Stellfuß (46) in der Ausbildung als Maschinen- oder Apparatefuß mit einem sich auf einer Aufstellfläche abstützenden Gewindeschaft (31), auf dem ein Gewindeelement (36) aufgeschraubt ist, bei dessen Drehung die Höhenlage des Stellfußes in Verbindung mit einer Tragvorrichtung (20) einstellbar ist, wobei die Tragvorrichtung einen höheneinstellbaren Gegenstand trägt und der Gewindeschaft im Innenraum einer ersten Hülse (1) kleineren Durchmessers angeordnet ist, wobei die erste Hülse (1) koaxial von einer zweiten Hülse (10) größeren Durchmessers umgeben ist, und die beiden Hülsen (1, 10) mit Betätigung des Gewindeelements (36) in axialer Richtung gegeneinander verschiebbar sind, **dadurch gekennzeichnet, dass** zur Schaffung eines Zugriffs auf das innenliegende Gewindeelement (36) die zweite Hülse (10) an der Tragvorrichtung (20) lösbar eingehängt ist.

2. Stellfuß (46) nach Anspruch 1, **dadurch gekennzeichnet, dass** die beiden Hülsen (1, 10) im Wesentlichen zylinderförmig ausgebildet und über einen definierten Verschiebebereich teleskopartig ineinander- und auseinanderschiebbar angeordnet sind.

3. Stellfuß (46) nach Anspruch 1 oder 2, **dadurch gekennzeichnet, dass** die obere Hülse (10) als Rasthülse ausgebildet ist, die eine formschlüssig lösbare Verbindung mit der Unterseite der Tragvorrichtung (20) eingeht.

4. Stellfuß (46) nach Anspruch 3, **dadurch gekennzeichnet, dass** die Hülse (10) an ihrem der Tragvorrichtung zugewandten Ende einen Rastabschnitt (45) aufweist, insbesondere in Form einer Rast- oder Schnappverbindung.

5. Stellfuß (46) nach Anspruch 4, **dadurch gekennzeichnet, dass** der Rastabschnitt (45) mindestens eine Rastnase (12) mit einer Hinterschneidung (13) umfasst, in die ein an der Unterseite der Tragvorrichtung (20) ausgebildeter Steg (22) einfahrbar und dort verrastbar ist.

6. Stellfuß (46) nach Anspruch 5, **dadurch gekennzeichnet, dass** der Rastabschnitt (45) eine Einführschräge (15) aufweist, welche die Einführung des Steges (22) unter die Rastnase (12) erleichtert, wobei der Steg nach Überwindung der Einführschräge (15) in einen Aufnahmeraum (14) unterhalb der Rastnase (12) einfährt und dort durch die Hinterschneidung (13) gesichert wird.

7. Stellfuß (46) nach einem der Ansprüche 4 bis 6, **dadurch gekennzeichnet, dass** der Rastabschnitt (45) mindestens einen Federkörper (16) aufweist, der sich federnd an die Unterseite der Tragvorrichtung (20) anlegt.

8. Stellfuß (46) nach Anspruch 7, **dadurch gekennzeichnet, dass** der Federkörper (16) aus dem Material der Hülse (10) besteht und durch ein mechanisches Fertigungsverfahren als materialeinheitlicher Federsteg ausgebildet ist, der zwei seitlich davon angeordnete Federschleifen (19) miteinander verbindet.

9. Stellfuß (46) nach einem der vorhergehenden Ansprüche, **dadurch gekennzeichnet, dass** die Tragvorrichtung (20) eine zentrale Durchgangsöffnung für den Gewindeschaft (31) aufweist und das Außengewinde (32) des Gewindeschafts (31) in ein damit korrespondierendes Innengewinde eines auf der Tragvorrichtung (20) aufliegenden Bauteils eingreift.
